# EUROPÄISCHE PATENTANMELDUNG

(11) **EP 3 480 815 A1**
(43) Veröffentlichungstag der Anmeldung: **08.05.2019**
(21) Anmeldenummer: 18200714.6
(22) Anmeldetag: 16.10.2018
(51) Int. Cl.: G10L 15/26, B60K 37/06

(54) **SPRACHSTEUERUNG FÜR EIN FAHRZEUG**

(30) Priorität: 06.11.2017 DE 102017219616
(71) Anmelder: AUDI AG, 85045 Ingolstadt (DE)
(72) Erfinder: Dusik, Jan, 85055 Ingolstadt (DE)

(57) **Zusammenfassung**

Die Erfindung betrifft eine Mensch-Maschine-Schnittstelle (Human Machine Interface, HMI) für ein Fahrzeug mit einem Mikrofon zum Erfassen eines von einem Fahrer oder einem weiteren Insassen des Fahrzeugs gesprochenen Befehlsworts und einem Steuergerät, welches ein Spracherkennungsmodul zum Erkennen mehrerer bestimmter Befehlsworte aufweist.

## Beschreibung

Die vorliegende Erfindung betrifft eine Mensch-Maschine-Schnittstelle (Human Machine Interface, HMI) für ein Fahrzeug mit einem Mikrofon zum Erfassen eines von einem Fahrer oder einem weiteren Insassen des Fahrzeugs gesprochenen Befehlsworts und einem Steuergerät, welches ein Spracherkennungsmodul (Automatic Speech Recognition, ASR) zum Erkennen mehrerer bestimmter Befehlsworte aufweist.

Üblicherweise weist ein Fahrzeug mehrere Funktionssysteme sowie eine Mensch-Maschine-Schnittstelle (Human Machine Interface, HMI) auf, mittels derer ein Fahrer oder ein weiterer Insasse des Fahrzeugs die mehreren Funktionssysteme betätigen kann. Entsprechend umfasst eine Mensch-Maschine-Schnittstelle eine Anzeigeeinrichtung, auf der den Funktionssystemen zugeordnete Bedienelemente, wie Schalter und Regler, dargestellt sind, und ein Betätigungsmittel zum Einschalten, Ausschalten und Verstellen der mehreren Funktionssysteme.

Angesichts der Vielzahl von Funktionssystemen sind die diesen zugeordneten Bedienelemente einer guten Übersichtlichkeit halber zumeist in einer baumartigen hierarchischen Menüstruktur angeordnet und über entsprechende Menüeinträge der Menüstruktur zugänglich. Daraus folgt für tiefe Menüstrukturen mit mehreren Hierarchieebenen, dass das Betätigungsmittel entsprechend mehrere Male bedient wird, um ein bestimmtes in einer tiefen Hierarchieebene angeordnetes Funktionssystem zu betätigen.

Zum Bedienen einer solchen Mensch-Maschine-Schnittstelle muss der Fahrer seinen Blick von einem Verkehrsgeschehen in einer Umgebung des Fahrzeugs abwenden und auf die Anzeigeeinheit der Mensch-Maschine-Schnittstelle richten. Bei einem manuellen Betätigungsmittel muss der Fahrer zusätzlich eine Hand von einem Lenkrad des Fahrzeugs lösen, um das Betätigungsmittel zu bedienen. Dies führt zu einer Ablenkung des Fahrers, wodurch die Sicherheit des Fahrzeugs beeinträchtigt sein kann. Zur Erhöhung der Sicherheit und des Bedienkomforts weisen Mensch-Maschine-Schnittstellen für Fahrzeuge zunehmend eine Sprachsteuerung auf, welche ohne Verwenden der Hand ein komfortables Navigieren durch die Menüstruktur ermöglicht.

So offenbart DE 103 60 655 A1 eine Mensch-Maschine-Schnittstelle zum Betätigen von Funktionssystemen eines Fahrzeugs. Die Mensch-Maschine-Schnittstelle umfasst eine hierarchische Anordnung von Menüeinträgen, welche den Funktionssystemen des Fahrzeugs zugeordnet sind, eine Anzeigeeinrichtung, welche mehrere Anzeigebereiche zum Darstellen der Menüeinträge aufweist, ein manuelles Betätigungsmittel zum Auswählen eines Menüeintrags und ein Spracherkennungsmodul, welches abhängig von einer Hierarchieebene und dem Anzeigebereich bestimmte gesprochene Menüeinträge erkennt und einen erkannten Menüeintrag auswählt.

Bei einer tiefen Menüstruktur müssen von dem Fahrer bei einem Navigieren durch die Menüstruktur demnach mehrere Menüeinträge gesprochen werden, was den Fahrer dennoch von dem Verkehrsgeschehen ablenken kann.

Zur Verringerung dieses Navigationsaufwands offenbart die DE 10 2009 018 590 A1 eine Mensch-Maschine-Schnittstelle zum Betätigen von Funktionen eines Fahrzeugs. Die Mensch-Maschinen-Schnittstelle umfasst eine hierarchische Anordnung von Menüeinträgen, welche den Funktionen des Fahrzeugs zugeordnet sind, eine Anzeigeeinrichtung, ein manuelles Betätigungsmittel zum Auswählen eines Menüeintrags und ein Spracherkennungsmodul mit einem bestimmten Wortschatz von gesprochenen Schlüsselwörtern, welches ein Schlüsselwort innerhalb einer gesprochenen Anweisung erkennt und Menüeinträge, welche dem erkannten Schlüsselwort zugeordnet sind, in der Anzeigeeinrichtung unabhängig von ihrer Hierarchiestufe in Listenform anzeigt.

Mit anderen Worten wird die vorgegebene hierarchische Menüstruktur mittels vorgegebener Schlüsselworte abgeflacht, wodurch die Bedienung der Mensch-Maschine-Schnittstelle erleichtert ist. Allerdings sind die beschriebenen Spracherkennungsmodule jeweils auf einen bestimmten vorgegebenen Wortschatz von Befehlsworten beschränkt, die von allen die Mensch-Maschine-Schnittstelle bedienenden Personen einheitlich verwendet werden müssen. Zudem müssen die Befehlsworte auch in einem gewissen Maß standardisiert, d. h. klar und deutlich, ausgesprochen werden, um von dem Spracherkennungsmodul erkannt zu werden.

DE 10 2013 219 649 A1 offenbart eine personalisierbare Mensch-Maschine-Schnittstelle zum Betätigen von Funktionen eines Fahrzeugs. Die Mensch-Maschine-Schnittstelle umfasst ein Mikrofon, ein Steuergerät mit einem Spracherkennungsmodul zum Erkennen gesprochener Befehlsworte und einem konfigurierbaren Abbildungsmodul, welches personalisierte Zuordnungen zwischen Befehlsworten und Funktionen des Fahrzeugs umfasst. Das Abbildungsmodul wird für eine bestimmte Person konfiguriert, indem die bestimmte Person gesprochene Befehlsworte über das Mikrofon eingibt und diesen jeweils eine Funktion des Fahrzeugs zuordnet.

Gebräuchliche Funktionssysteme eines Fahrzeugs umfassen auch ein sogenanntes Infotainmentsystem, über das der Fahrer und weitere Insassen des Fahrzeugs auf Informationen und Unterhaltungsinhalte zugreifen können. Beispielsweise kann das Infotainmentsystem einen Zugriff auf Fahrtroutendaten und Verkehrsdaten sowie auf Radiosender oder Musikstücke gewähren.

Es ist aber darüber hinaus wünschenswert, über das Infotainmentsystem des Fahrzeugs auf weitere online abrufbare digitale Inhalte zuzugreifen. Dieser Aspekt spielt vor allem bei Fahrzeugen mit mindestens teilweiser Selbstfahrfunktionalität (Autonomes Fahren) eine zunehmend wichtige Rolle. Eine Besonderheit der online abrufbaren digitalen Inhalte besteht darin, dass sie fortlaufend aktualisiert werden, also eine starke Veränderungsdynamik aufweisen. Die Sprachsteuerungen der beschriebenen Mensch-Maschine-Schnittstellen betreffen dagegen jeweils eine durch die Funktionssysteme des Fahrzeugs vorgegebene statische Menüstruktur mit einer festgelegten Zahl an Menüeinträgen, welchen eine entsprechende Zahl an Befehlsworten zugeordnet ist.

Der Erfindung liegt daher die Aufgabe zugrunde, eine flexible Mensch-Maschine-Schnittstelle zur Verfügung zu stellen, welche einen sprachgesteuerten Zugriff auf einen online abrufbaren digitalen Inhalt ermöglicht. Darüber hinaus ist es Aufgabe der Erfindung, ein Verfahren zum Betreiben einer entsprechenden Sprachsteuerung für eine Mensch-Maschine-Schnittstelle anzugeben.

Ein Gegenstand der vorliegenden Erfindung ist eine Mensch-Maschine-Schnittstelle für ein Fahrzeug, mit einem Mikrofon zum Erfassen eines von einem Fahrer oder einem weiteren Insassen des Fahrzeugs gesprochenen Befehlsworts und einem Steuergerät, welches ein Spracherkennungsmodul zum Erkennen mehrerer bestimmter Befehlsworte aufweist. Dabei wird ein Befehlswort auch innerhalb einer natürlichsprachlichen Äußerung des Fahrers und des weiteren Insassen des Fahrzeugs erkannt.

Erfindungsgemäß umfassen die bestimmten Befehlsworte mindestens ein Schlagwort, welches einem digitalen Inhalt zugeordnet ist. Mit anderen Worten gehört das Schlagwort zu der Menge der Befehlsworte, die von dem Spracherkennungsmodul erkannt werden, ist also in technischer Hinsicht äquivalent. Das bedeutet, dass das Steuergerät des Fahrzeugs ein Funktionssystem des Fahrzeugs betätigt, wenn das Spracherkennungsmodul ein Schlagwort erkannt hat.

In einer bevorzugten Ausführungsform ist das mindestens eine Schlagwort regelmäßig und/oder automatisch aktuell. Das bedeutet, dass sich die zu dem Befehlswortschatz des Spracherkennungsmoduls gehörenden Schlagworte im Laufe der Zeit ändern können. Ein Schlagwort kann sowohl in den Befehlswortschatz eingefügt werden als auch aus dem Befehlswortschatz gelöscht werden. Ein weiterer Aspekt der Aktualität eines Schlagwortes betrifft die diesem Schlagwort zugeordneten digitalen Inhalte. Einem bestimmten Schlagwort können zu einem Zeitpunkt mehrere verschiedene digitale Inhalte zugeordnet sein. Die dem bestimmten Schlagwort zugeordneten digitalen Inhalte können sich im Laufe der Zeit ändern.

In manchen Ausführungsformen stellt mindestens ein Schlagwort eine Abstraktion des zugeordneten digitalen Inhalts dar. Es ist nicht erforderlich, dass ein Schlagwort in einem online abrufbaren digitalen Inhalt explizit enthalten ist. Vielmehr kann das Schlagwort einen zugeordneten digitalen Inhalt auch abstrakt beschreiben, beispielsweise im Sinne eines Oberbegriffs (Konzept) oder eines Kategoriebegriffs.

In einer Ausführungsform weist das Steuergerät ein Verschlagwortungsmodul auf, welches konfiguriert ist, einen digitalen Inhalt zu analysieren und dem analysierten digitalen Inhalt mindestens ein Schlagwort zuzuordnen. Mit dem Verschlagwortungsmodul kann ein digitaler Inhalt von dem Steuergerät verschlagwortet werden, d. h. dem digitalen Inhalt werden ein oder mehrere Schlagworte zugeordnet. Zum Verschlagworten digitaler Inhalte kann das Verschlagwortungsmodul entsprechende Algorithmen, wie beispielsweise eHITS oder TermsNet, ausführen.

In weiteren Ausführungsformen umfasst die Mensch-Maschine-Schnittstelle eine Anzeigeeinrichtung und ist das Steuergerät konfiguriert, einen digitalen Inhalt, welcher dem mindestens einen Schlagwort zugeordnet ist, online abzurufen und auf der Anzeigeeinrichtung anzuzeigen. Wenn die Mensch-Maschine-Schnittstelle ein Schlagwort erkannt hat, bewirkt das Steuergerät ein Herunterladen und Anzeigen von digitalen Inhalten, welche diesem Schlagwort zugeordnet sind. Auf diese Weise muss kein digitaler Inhalt dauerhaft in dem Steuergerät gespeichert sein.

Gegenstand der vorliegenden Erfindung ist auch ein Verfahren zum Betreiben eines Spracherkennungsmoduls eines Steuergeräts eines Fahrzeugs, insbesondere mittels einer erfindungsgemäßen Mensch-Maschine-Schnittstelle.

Erfindungsgemäß wird mehreren bestimmten gesprochenen Befehlsworten, welche von dem Spracherkennungsmodul erkannt werden, mindestens ein Schlagwort hinzugefügt, welches einem digitalen Inhalt zugeordnet ist. Auf diese Weise wird der von dem Spracherkennungsmodul erkannte Wortschatz von Befehlsworten um Schlagworte erweitert, welche jeweils einen Zugriff auf zugeordnete online abrufbare digitale Inhalte ermöglichen.

In einer bevorzugten Ausführungsform wird der digitale Inhalt von einem Verschlagwortungsmodul analysiert und dem analysierten digitalen Inhalt von dem Verschlagwortungsmodul mindestens ein Schlagwort zugeordnet. Ein Verschlagwortungsmodul kann einen digitalen Inhalt vollautomatisch verschlagworten, d. h. einem digitalen Inhalt ohne persönliches Mitwirken ein oder mehrere Schlagworte zuordnen. Dazu wird von dem Verschlagwortungsmodul ein spezieller Algorithmus, wie beispielsweise eHITS oder TermsNet, ausgeführt. Derartige Algorithmen sind in der Lage, neben Schlagworten, welche in dem digitalen Inhalt enthalten sind, auch abstrakte Schlagworte, welche in dem digitalen Inhalt nicht enthalten sind, zuzuordnen.

In einer weiteren Ausführungsform wird der digitale Inhalt von einem außerhalb des Fahrzeugs angeordneten ersten Server in das Steuergerät des Fahrzeugs geladen und von dem Steuergerät verschlagwortet. Die Verschlagwortung des online abrufbaren digitalen Inhalts erfolgt durch ein in dem Steuergerät des Fahrzeugs gespeichertes Verschlagwortungsmodul. In dieser Ausführungsform kann das Verschlagwortungsmodul auch verwendet werden, um digitale Inhalte, welche nicht von einem externen ersten Server abgerufen werden, sondern lediglich in dem Steuergerät des Fahrzeugs gespeichert sind, zu verschlagworten.

In einer anderen Ausführungsform wird der digitale Inhalt von einem außerhalb des Fahrzeugs angeordneten zweiten Server (Backend) verschlagwortet und das mindestens eine dem digitalen Inhalt zugeordnete Schlagwort online in das Steuergerät des Fahrzeugs übertragen. Bei dieser Variante findet die Verschlagwortung eines online abrufbaren digitalen Inhalts zentral auf einem externen zweiten Server außerhalb des Fahrzeugs statt. Auf diese Weise können die zugeordneten Schlagworte in mehrere Fahrzeuge übertragen werden und von deren Fahrern und/oder weiteren Insassen jeweils in gleicher Weise genutzt werden.

Selbstverständlich und vorteilhaft können die Merkmale der beiden vorgenannten Ausführungsformen auch miteinander kombiniert werden, ohne den Schutzbereich der Erfindung zu verlassen.

In einer bevorzugten Ausführungsform wird ein digitaler Inhalt, welchem das mindestens eine Schlagwort zugeordnet ist, online abgerufen und auf einer Anzeigeeinrichtung des Fahrzeugs angezeigt, wenn das mindestens eine Schlagwort von dem Spracherkennungsmodul erkannt wird. Auf diese Weise wird vermieden, dass digitale Inhalte in dem Steuergerät des Fahrzeugs gespeichert und vorgehalten werden müssen.

Die Erfindung ist anhand einer Ausführungsform in der Zeichnung schematisch dargestellt und wird unter Bezugnahme auf die Zeichnung weiter beschrieben. Es zeigt:

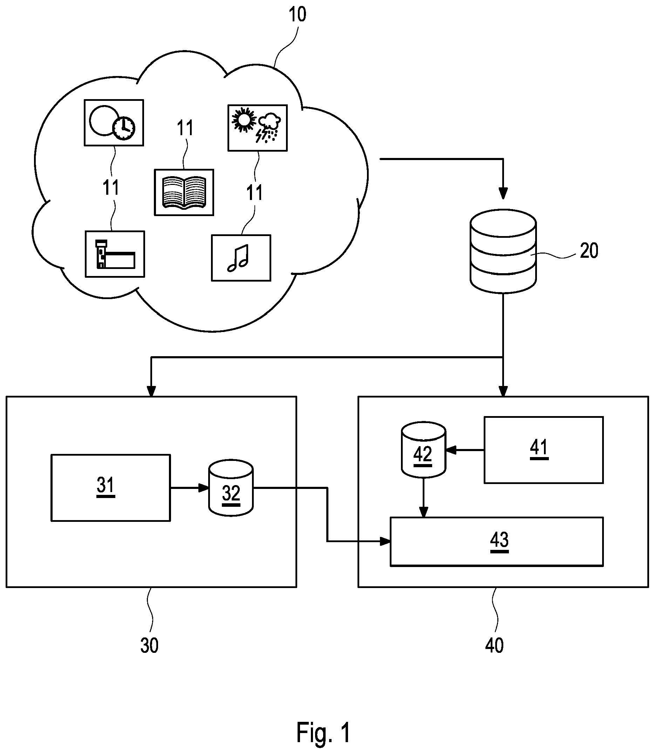

- Figur 1: in einer schematischen Darstellung ein Ablaufdiagramm einer Ausführungsform des erfindungsgemäßen Verfahrens.

Figur 1 zeigt in einer schematischen Darstellung ein Ablaufdiagramm einer Ausführungsform des erfindungsgemäßen Verfahrens. Mit dem Verfahren wird ein Spracherkennungsmodul 43 eines Steuergeräts einer Mensch-Maschine-Schnittstelle eines Fahrzeugs 40 betrieben. Dabei wird mehreren bestimmten gesprochenen Befehlsworten, welche von dem Spracherkennungsmodul 43 erkannt werden, mindestens ein Schlagwort hinzugefügt, welches einem digitalen Inhalt 11 zugeordnet ist. Auf diese weise wird der von dem Spracherkennungsmodul 43 erkannte Wortschatz erweitert. Der digitale Inhalt 11 wird im Internet 10, beispielsweise aus einer über das Internet 10 zugänglichen Cloud, abgerufen.

Der digitale Inhalt 11 wird von einem außerhalb des Fahrzeugs 40 angeordneten ersten Server 20 in das Steuergerät des Fahrzeugs 40 geladen und von dem Steuergerät verschlagwortet. Dabei wird der digitale Inhalt 11 von einem Verschlagwortungsmodul 41 des Steuergeräts analysiert. Dem analysierten digitalen Inhalt 11 wird von dem Verschlagwortungsmodul 41 mindestens ein Schlagwort zugeordnet und in einer Speichereinheit 42 des Steuergeräts gespeichert. Der zum Verschlagworten geladene digitale Inhalt 11 kann anschließend in dem Steuergerät gelöscht werden, d. h. lediglich Schlagworte und ihre Zuordnungen bleiben in dem Steuergerät gespeichert.

Alternativ oder zusätzlich dazu wird der digitale Inhalt 11 von einem außerhalb des Fahrzeugs 40 angeordneten zweiten Server 30 (Backend) verschlagwortet. Dabei wird der digitale Inhalt 11 von einem Verschlagwortungsmodul 31 analysiert und dem analysierten digitalen Inhalt 11 von dem Verschlagswortungsmodul 31 mindestens ein Schlagwort zugeordnet und in einer Speichereinheit 32 des zweiten Servers 30 gespeichert. Dann wird das mindestens eine dem digitalen Inhalt 11 zugeordnete Schlagwort online in das Steuergerät des Fahrzeugs 40 übertragen.

Wenn ein gespeichertes Schlagwort von dem Spracherkennungsmodul 43 erkannt wird, wird der dem erkannten Schlagwort abgerufene digitale Inhalt 11 online abgerufen und auf einer Anzeigeeinrichtung des Fahrzeugs 40 angezeigt. Falls dem erkannten Schlagwort mehrere digitale Inhalte 11 zugeordnet sind, wird zunächst eine Auswahlliste der mehreren zugeordneten digitalen Inhalte 11 angezeigt.

Zum Ausführen des beschriebenen Verfahrens wird eine Mensch-Maschine-Schnittstelle für ein Fahrzeug 40 verwendet. Sie umfasst ein Mikrofon zum Erfassen eines von einem Fahrer oder einem weiteren Insassen des Fahrzeugs 40 gesprochenen Befehlsworts und ein Steuergerät, welches ein Spracherkennungsmodul 43 zum Erkennen mehrerer bestimmter Befehlsworte aufweist. Das Steuergerät weist zudem ein Verschlagwortungsmodul 41 auf, welches konfiguriert ist, einen digitalen Inhalt 11 zu analysieren und dem analysierten digitalen Inhalt 11 mindestens ein Schlagwort zuzuordnen. Ferner umfasst die Mensch-Maschine-Schnittstelle eine Anzeigeeinrichtung.

Die bestimmten Befehlsworte umfassen nach dem Durchführen des erfindungsgemäßen Verfahrens mindestens ein regelmäßig und automatisch aktuelles Schlagwort, welches einem digitalen Inhalt 11 zugeordnet ist. Dabei kann das mindestens eine Schlagwort auch eine Abstraktion des zugeordneten digitalen Inhalts 11 darstellen, d. h. ein Oberbegriff oder ein Kategoriebegriff sein.

Das Steuergerät ist überdies konfiguriert, einen digitalen Inhalt 11, welcher dem mindestens einen Schlagwort zugeordnet ist, online abzurufen und auf der Anzeigeeinrichtung anzuzeigen.

Ein Vorteil des erfindungsgemäßen Verfahrens und der erfindungsgemäßen Mensch-Maschine-Schnittstelle ist, dass online abrufbare digitale Inhalte über eine Sprachsteuerung bequem in ein Fahrzeug geladen und dort genutzt werden können. Dies wird durch eine Erweiterung des erkennbaren Wortschatzes von Befehlsworten eines Spracherkennungsmoduls durch Schlagworte erreicht, welche den digitalen Inhalten mittels einer automatischen Verschlagwortung zugeordnet werden.

### BEZUGSZEICHENLISTE:

- 10: Internet
- 11: digitaler Inhalt
- 20: erster Server
- 30: zweiter Server (Backend)
- 31: Verschlagwortungsmodul
- 32: Speichereinheit
- 40: Fahrzeug
- 41: Verschlagwortungsmodul
- 42: Speichereinheit
- 43: Spracherkennungsmodul

## Patentansprüche

1. Mensch-Maschine-Schnittstelle für ein Fahrzeug (40), mit einem Mikrofon zum Erfassen eines von einem Fahrer oder einem weiteren Insassen des Fahrzeugs (40) gesprochenen Befehlsworts und einem Steuergerät, welches ein Spracherkennungsmodul (43) zum Erkennen mehrerer bestimmter Befehlsworte aufweist, bei der die bestimmten Befehlsworte mindestens ein Schlagwort umfassen, welches einem digitalen Inhalt (11) zugeordnet ist.

2. Mensch-Maschine-Schnittstelle nach Anspruch 1, bei der das mindestens eine Schlagwort regelmäßig und/oder automatisch aktuell ist.

3. Mensch-Maschine-Schnittstelle nach einem der Ansprüche 1 oder 2, bei der mindestens ein Schlagwort eine Abstraktion des zugeordneten digitalen Inhalts (11) darstellt.

4. Mensch-Maschine-Schnittstelle nach einem der Ansprüche 1 bis 3, bei der das Steuergerät ein Verschlagwortungsmodul (41) aufweist, welches konfiguriert ist, einen digitalen Inhalt (11) zu analysieren und dem analysierten digitalen Inhalt (11) mindestens ein Schlagwort zuzuordnen.

5. Mensch-Maschine-Schnittstelle nach einem der Ansprüche 1 bis 4, welche eine Anzeigeeinrichtung umfasst und bei der das Steuergerät konfiguriert ist, einen digitalen Inhalt (11), welcher dem mindestens einen Schlagwort zugeordnet ist, online abzurufen und auf der Anzeigeeinrichtung anzuzeigen.

6. Verfahren zum Betreiben eines Spracherkennungsmoduls (43) eines Steuergeräts einer Mensch-Maschine-Schnittstelle eines Fahrzeugs (40), insbesondere mittels einer Mensch-Maschine-Schnittstelle nach einem der Ansprüche 1 bis 5, bei dem mehreren bestimmten gesprochenen Befehlsworten, welche von dem Spracherkennungsmodul (43) erkannt werden, mindestens ein Schlagwort hinzugefügt wird, welches einem digitalen Inhalt (11) zugeordnet ist.

7. Verfahren nach Anspruch 6, bei dem der digitale Inhalt (11) von einem Verschlagwortungsmodul (31, 41) analysiert wird und dem analysierten digitalen Inhalt (11) von dem Verschlagwortungsmodul (31, 41) mindestens ein Schlagwort zugeordnet wird.

8. Verfahren nach Anspruch 7, bei dem der digitale Inhalt (11) von einem außerhalb des Fahrzeugs (40) angeordneten ersten Server (20) in das Steuergerät des Fahrzeugs (40) geladen und von dem Steuergerät verschlagwortet wird.

9. Verfahren nach Anspruch 7, bei dem der digitale Inhalt (11) von einem außerhalb des Fahrzeugs (40) angeordneten zweiten Server (30) verschlagwortet wird und das mindestens eine dem digitalen Inhalt (11) zugeordnete Schlagwort online in das Steuergerät des Fahrzeugs (40) übertragen wird.

10. Verfahren nach einem der Ansprüche 6 bis 9, bei dem ein digitaler Inhalt (11), welchem das mindestens eine Schlagwort zugeordnet ist, online abgerufen und auf einer Anzeigeeinrichtung des Fahrzeugs (40) angezeigt wird, wenn das mindestens eine Schlagwort von dem Spracherkennungsmodul (43) erkannt wird.
